# EUROPÄISCHE PATENTSCHRIFT

(11) **EP 3 482 074 B1**
(45) Veröffentlichungstag und Bekanntmachung des Hinweises auf die Patenterteilung: **20.07.2022**
(21) Anmeldenummer: 17734045.2
(22) Anmeldetag: 26.06.2017
(51) Int. Cl.: F03D 80/80, F03D 15/00

(54) **GETRIEBEGLOCKE FÜR EIN WINDKRAFTGETRIEBE**
BELL HOUSING FOR A WIND TURBINE GEAR MECHANISM
CARTER DE MULTIPLICATEUR POUR MULTIPLICATEUR D'ÉOLIENNE

(30) Priorität: 07.07.2016 DE 102016212375
(43) Veröffentlichungstag der Anmeldung: 15.05.2019
(73) Patentinhaber: ZF Friedrichshafen AG, 88046 Friedrichshafen (DE); Vestas Wind Systems A/S, 8200 Aarhus N (DK)
(72) Erfinder: STOYANOV, Deyan, 44803 Bochum (DE); FISCHER, Steffen, 59394 Nordkirchen (DE)
(74) Vertreter: ZF Friedrichshafen AG
(86) Internationale Anmeldenummer: PCT/EP2017/065670
(87) Internationale Veröffentlichungsnummer: WO 2018/007184

(56) Entgegenhaltungen:
- Anonymous: "Adwen Adwen begins testing of the AD 8-180 drivetrain at Fraunhofer IWES test bench in Bremerhaven - Adwen", , 6. Juni 2016 (2016-06-06), XP055406630, Gefunden im Internet: URL:http://www.adwenoffshore.com/adwen-beg ins-testing-of-the-ad-8-180-drivetrain-at- fraunhofer-iwes-test-bench-in-bremerhaven- 2/ [gefunden am 2017-09-14]

## Beschreibung

Die Erfindung betrifft eine Getriebeglocke nach dem Oberbegriff von Anspruch 1.

Zur Fixierung eines Getriebes in der Gondel einer Windkraftanlage sind aus dem Stand der Technik Drehmomentstützen und Getriebeglocken bekannt. Getriebeglocken sind in der Regel mit Rippen versehen, um die Steifigkeit zu erhöhen. Die Rippen bereiten allerdings Probleme beim Gießen.

Die Druckschrift Anonymous: "Adwen Adwen begins testing of the AD 8-180 drivetrain at Fraunhofer !WES test bench in Bremerhaven - Adwen", 6. Juni 2016 (2016-06-06), XP055406630, gefunden im Internet: URL:http://www.adwenoffshore.com/adwen-begins-testing-of-the-ad-8-180-drivetrain-at-fraunhofer-iwes-testbench-in-bremerhaven-2/ [gefunden am 2017-09-14] offenbart einen Prototyp eines Getriebes mit einer Getriebeglocke, die Aussparungen aufweist.

Der Erfindung liegt die Aufgabe zugrunde, eine Getriebeglocke verfügbar zu machen, welche die den aus dem Stand der Technik bekannten Lösungen innewohnenden Nachteile nicht aufweist. Insbesondere soll die Getriebeglocke sich einfach gießen lassen. Das soll nicht zu Lasten der Steifigkeit gehen. Ziel ist es zudem, das Schwingungsverhalten der Getriebeglocke zu verbessern.

Diese Aufgabe wird gelöst durch eine Getriebeglocke nach Anspruch 1. Bevorzugte Weiterbildungen sind in den Unteransprüchen enthalten.

Die Getriebeglocke weist einen ersten Bereich, einen zweiten Bereich und eine Wandung auf. Der erste Bereich ist ausgebildet, die Getriebeglocke in einer Gondel einer Windkraftanlage zu fixieren. Der zweite Bereich dient der Aufnahme eines Getriebes, d.h. der Fixierung eines Getriebes in der Getriebeglocke. Somit bildet die Getriebeglocke ein Zwischenstück zwischen dem Getriebe und der Gondel, welches das Getriebe in der Gondel fixiert.

Der erste Bereich und/oder der zweite Bereich sind vorzugsweise als Flansch ausgestaltet. Ein Flansch hat die Grundform eines Toroids und ist mit Bohrungen versehen. Diese dienen dazu, den Flansch mit einem Gegenstück, in der Regel einem weiteren Flansch, zu verschrauben.

Die Wandung verbindet den ersten Bereich und den zweiten Bereich miteinander. Hierdurch wird eine fixe Position des ersten Bereichs und des zweiten Bereichs relativ zueinander festgelegt.

Die Wand verläuft vorzugsweise zwischen den beiden Bereichen entlang kreisringförmiger Querschnittsflächen. Eine erste Kreisringförmige Schnittfläche grenzt dabei den ersten Bereich von der Wandung ab. Entsprechend grenzt eine zweite kreisringförmige Schnittfläche den zweiten Bereich von der Wandung ab.

Die Wandung ist mit mindestens zwei Aussparungen versehen. Die Aussparungen sind etwa als Vertiefungen bzw. Ausnehmungen oder als Löcher ausgestaltet. Die Aussparungen haben einen günstigen Einfluss auf das Verhältnis zwischen Masse und Steifigkeit der Getriebeglocke.

In einer bevorzugten Weiterbildung hat die Getriebeglocke eine rotationssymmetrische Grundform. Insbesondere kann die Grundform zu einer Drehachse rotationssymmetrisch sein. Vornehmlich sind der erste Bereich, der zweite Bereich und die Wandung jeweils rotationssymmetrisch.

Die Grundform eines Körpers bezeichnet die Form eines ursprünglichen Körpers, aus dem der erst genannte Körper durch Eliminieren einzelner Bereiche, etwa durch Einfügen von Aussparungen, entsteht. Die rotationssymmetrische Getriebeglocke entsteht also aus einem rotationssymmetrischen Ursprungskörper, in den unter anderem die obengenannten Aussparungen eingebracht werden.

Die Aussparungen sind in einer darüber hinaus bevorzugten Weiterbildung so angeordnet, dass mindestens eine Querschnittsebene alle Aussparungen schneidet. Bei einer Querschnittsebene handelt es sich um eine Ebene, die orthogonal zu der oben genannte Symmetrieachse und/oder Drehachse ausgerichtet ist.

Darüber hinausgehend sind bevorzugt jeweils zwei der Aussparungen durch Rotation aufeinander abbildbar. Die Rotation kann insbesondere um die oben genannte Symmetrieachse und/oder Drehachse erfolgen. Die Abbildbarkeit aufeinander durch Rotation bedeutet, dass die Aussparungen in Umfangsrichtung zueinander versetzt angeordnet sind. Darüber hinaus impliziert die Abbildbarkeit aufeinander, dass die Aussparungen die gleiche Form haben.

Es wird eine radiale Ausrichtung der Aussparung bevorzugt. Jede Aussparung weist mindestens eine Mündung auf. Eine radiale Ausrichtung der Aussparung ist gleichbedeutend mit einem äquidistanten Verlauf der Mündung zu der oben genannten Symmetrieachse und/oder Drehachse. Jeder Punkt der Mündung einer radial ausgerichteten Aussparung hat also einen gleichen Abstand zu der Symmetrieachse und/oder Drehachse.

Die Aussparungen sind vorzugsweise als durchgängige Löcher weitergebildet. Eine durchgängige Aussparung zeichnet sich durch zwei Mündungen aus, die durch die Aussparung verbunden sind, zwischen denen also die Aussparung verläuft.

Die Wandstärke der Getriebeglocke ist in einer darüber hinaus bevorzugten Weiterbildung gleichbleibend bzw. konstant. Dies bedeutet, dass die Stärke bzw. Dicke der Wandung im Querschnitt an jeder Stelle den gleichen Wert hat. Hierdurch verbessert sich die Fertigbarkeit durch Gießen.

Die Aussparungen sind bevorzugt rautenförmig.

Die Getriebeglocke ist erfindungsgemäß Teil eines Getriebes mit mindestens einer Planetenstufe. Die Planetenstufe weise neben mindestens zwei Planetenrädern ein Sonnenrad, ein Hohlrad und einen Planetenträger, in dem die Planetenräder drehbar gelagert sind, auf. Jedes der Planetenräder kämmt mit dem Sonnenrad und/oder dem Hohlrad.

Die Anzahl der Aussparungen der Getriebeglocke ist nicht ganzzahlig teilbar durch die Anzahl der Planetenräder. Hierdurch verbessert sich das Schwingungsverhalten des Getriebes.

Das Getriebe weist in einer bevorzugten Weiterbildung eine Antriebswelle auf, die durch die Getriebeglocke hindurch verläuft. Die bedeutet umgekehrt, dass die Getriebeglocke die Antriebswelle umgibt.

Die Antriebswelle ist vorzugsweise drehfest mit dem Sonnenrad, dem Hohlrad oder dem Planetenträger der Planetenstufe verbunden.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1a und 1b: eine Getriebeglocke; und
- Fig. 2: ein Getriebe mit der Getriebeglocke.

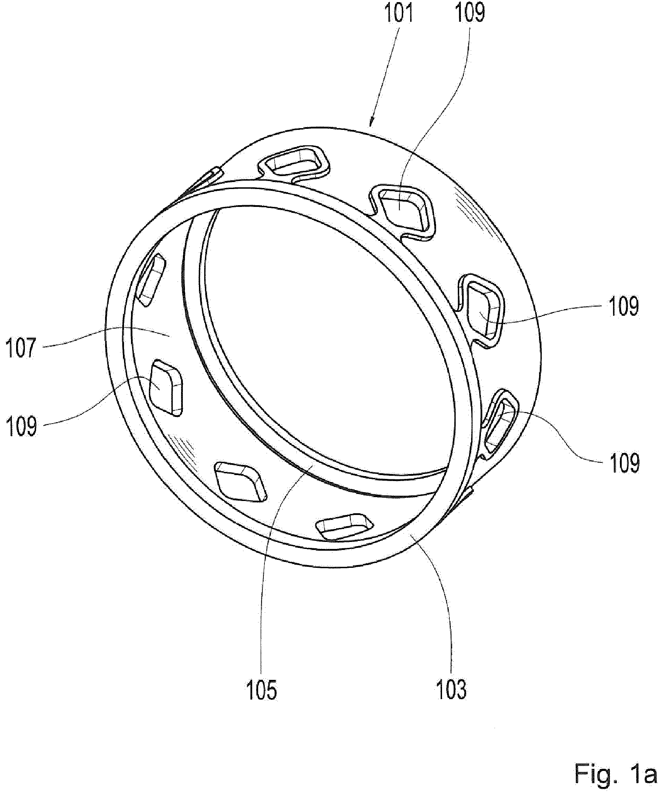

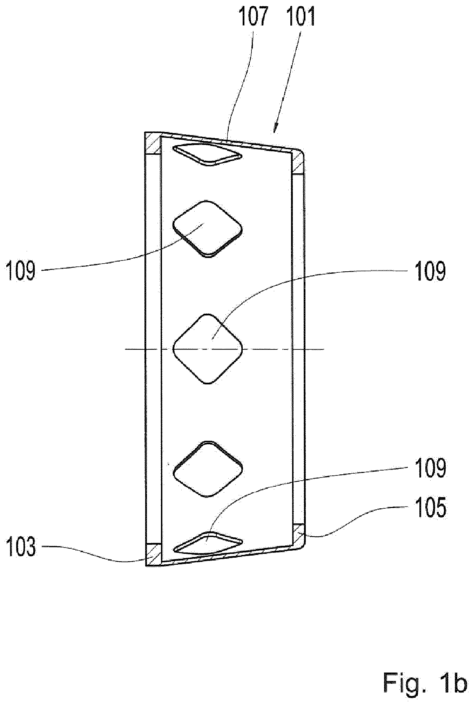

Die in den Figuren 1a und 1b dargestellte Getriebeglocke 101 ist mit einem kreisringförmigen ersten Flansch 103 und einem ebenso kreisringförmigen zweiten Flansch 105 versehen. Die beiden Flansche 103, 105 sind durch eine Wandung 107 miteinander verbunden. In die Wandung 107 sind rautenförmige Aussparungen 109 eingebracht.

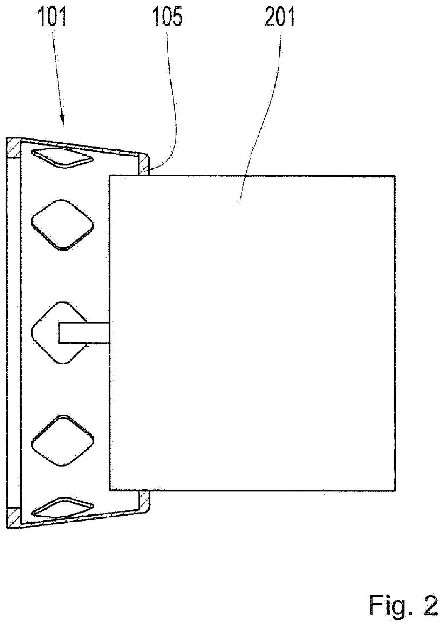

Wie in Fig. 2 dargestellt, kann der zweite Flansch 105 mit einem Gehäuse eines Getriebes 201 verschraubt werden.

### Bezuaszeichen

- 101: Getriebeglocke
- 103: erster Flansch
- 105: zweiter Flansch
- 107: Wandung
- 109: Aussparung

## Patentansprüche

1. Getriebeglocke (101) mit einem ersten Bereich (103) zur Fixierung in einer Gondel einer Windkraftanlage, mit einem zweiten Bereich (105) zur Aufnahme eines Getriebes und mit einer Wandung (107); wobei
die Wandung (107) den ersten Bereich (103) und den zweiten Bereich (105) miteinander verbindet; und wobei
die Wandung (107) mit mindestens zwei Aussparungen (109) versehen ist; **gekennzeichnet durch**
mindestens eine Planetenstufe mit Planetenrädern; wobei
die Anzahl der Aussparungen (109) der Getriebeglocke nicht ganzzahlig teilbar ist durch die Anzahl der Planetenräder.

2. Getriebeglocke (101) nach einem der vorhergehenden Ansprüche; **gekennzeichnet durch**
eine rotationssymmetrische Grundform.

3. Getriebeglocke (101) nach einem der vorhergehenden Ansprüche; **dadurch gekennzeichnet, dass**
die Aussparungen (109) so angeordnet sind, dass mindestens eine Querschnittsebene die Aussparungen (109) schneidet.

4. Getriebeglocke (101) nach dem vorhergehenden Anspruch; **dadurch gekennzeichnet, dass**
jeweils zwei der Aussparungen (109) durch Rotation aufeinander abbildbar sind.

5. Getriebeglocke (101) nach einem der vorhergehenden Ansprüche; **dadurch gekennzeichnet, dass**
die Aussparungen (109) radial ausgerichtet sind.

6. Getriebeglocke (101) nach einem der vorhergehenden Ansprüche; **dadurch gekennzeichnet, dass**
die Aussparungen (109) durchgängig sind.

7. Getriebeglocke (101) nach einem der vorhergehenden Ansprüche; **gekennzeichnet durch**
eine gleichbleibende Stärke der Wandung (107).

8. Getriebeglocke (101) nach einem der vorhergehenden Ansprüche; **dadurch gekennzeichnet, dass**
die Aussparungen (109) rautenförmig sind.

9. Getriebe mit einer Getriebeglocke (101) nach einem der vorhergehenden Ansprüche; **gekennzeichnet durch**
eine Antriebswelle; wobei
die Antriebswelle durch die Getriebeglocke (101) hindurch verläuft.

10. Getriebe nach dem vorhergehenden Anspruch; **dadurch gekennzeichnet, dass** die Antriebswelle drehfest mit einem Sonnenrad, Hohlrad oder Planetenträger der Planetenstufe verbunden ist.

## Claims

1. Bell housing (101) having a first region (103) for attachment in a nacelle of a wind turbine, having a second region (105) for accommodating a gear mechanism and having a wall (107); wherein
the wall (107) connects the first region (103) and the second region (105) to one another; and wherein the wall (107) is provided with at least two cutouts (109); **characterized by**
at least one epicyclic stage with planet gears; wherein
the number of cutouts (109) in the bell housing is not an integer multiple of the number of planet gears.

2. Bell housing (101) according to one of the preceding claims, **characterized by**
a rotationally symmetric basic shape.

3. Bell housing (101) according to one of the preceding claims, **characterized in that**
the cutouts (109) are arranged in such a way that at least one plane of cross section intersects the cutouts (109).

4. Bell housing (101) according to one of the preceding claims, **characterized in that**
any two of the cutouts (109) are rotational images of one another.

5. Bell housing (101) according to one of the preceding claims, **characterized in that**
the cutouts (109) are oriented radially.

6. Bell housing (101) according to one of the preceding claims, **characterized in that**
the cutouts (109) are through-openings.

7. Bell housing (101) according to one of the preceding claims, **characterized in that**
the wall (107) is of constant thickness.

8. Bell housing (101) according to one of the preceding claims, **characterized in that**
the cutouts (109) are rhombic.

9. Gear mechanism having a bell housing (101) according to one of the preceding claims, **characterized by** a driveshaft; wherein
the driveshaft runs through the bell housing (101).

10. Gear mechanism according to the preceding claim, **characterized in that**
the driveshaft is connected in a to a sun gear, a ring gear or a planet carrier of the epicyclic stage so as to be fixed in rotation therewith.

## Revendications

1. Cloche de transmission (101) avec une première zone (103) pour la fixation dans une nacelle d'une éolienne, avec une deuxième zone (105) pour la réception d'une transmission et avec une paroi (107) ;
la paroi (107) reliant la première zone (103) et la deuxième zone (105) entre elles ; et
la paroi (107) étant pourvue d'au moins deux évidements (109) ; **caractérisée par**
au moins un étage planétaire avec des satellites ;
le nombre d'évidements (109) de la cloche de transmission n'étant pas divisible sans reste par le nombre de satellites.

2. Cloche de transmission (101) selon l'une quelconque des revendications précédentes ; **caractérisée par** une forme de base à symétrie de rotation.

3. Cloche de transmission (101) selon l'une quelconque des revendications précédentes ; **caractérisée en ce que** les évidements (109) sont agencés de telle sorte qu'au moins un plan de section transversale coupe les évidements (109).

4. Cloche de transmission (101) selon la revendication précédente ; **caractérisée en ce que** deux des évidements (109) peuvent respectivement être reproduits l'un sur l'autre par rotation.

5. Cloche de transmission (101) selon l'une quelconque des revendications précédentes ; **caractérisée en ce que** les évidements (109) sont orientés radialement.

6. Cloche de transmission (101) selon l'une quelconque des revendications précédentes ; **caractérisée en ce que** les évidements (109) sont traversants.

7. Cloche de transmission (101) selon l'une quelconque des revendications précédentes ; **caractérisée par** une épaisseur constante de la paroi (107).

8. Cloche de transmission (101) selon l'une quelconque des revendications précédentes ; **caractérisée en ce que** les évidements (109) sont en forme de losange.

9. Transmission avec une cloche de transmission (101) selon l'une quelconque des revendications précédentes ; **caractérisée par** un arbre d'entraînement ; l'arbre d'entraînement s'étendant à travers la cloche de transmission (101).

10. Transmission selon la revendication précédente ; **caractérisée en ce que** l'arbre d'entraînement est relié de manière solidaire en rotation à une roue solaire, une couronne ou un porte-satellites de l'étage planétaire.
